Europäisches Patentamt

European Patent Office

Office européen des brevets

(19)

(11) Veröffentlichungsnummer: **0 351 447 B1**

(12) # EUROPÄISCHE PATENTSCHRIFT

(45) Veröffentlichungstag der Patentschrift:
06.11.91 Patentblatt 91/45

(51) Int. Cl.⁵: **F16D 69/04,** F16D 65/02,
F16D 69/02, B32B 25/04,
F16D 13/64

(21) Anmeldenummer: 88115113.8

(22) Anmeldetag: 15.09.88

(54) **Mehrschichtiges Bauelement zur Übertragung einer Reibungskraft, insbesondere für Kupplungen oder Bremsen.**

(30) Priorität: 22.07.88 DE 8809363 U

(43) Veröffentlichungstag der Anmeldung:
24.01.90 Patentblatt 90/04

(45) Bekanntmachung des Hinweises auf die
Patenterteilung:
06.11.91 Patentblatt 91/45

(84) Benannte Vertragsstaaten:
AT BE CH DE ES FR GB GR IT LI LU NL SE

(56) Entgegenhaltungen:
DE-A- 2 305 701
DE-B- 1 256 092
DE-U- 7 628 630
FR-A- 2 392 284
GB-A- 1 359 570
GB-A- 2 191 830
US-A- 1 784 994

(56) Entgegenhaltungen:
US-A- 1 872 547
US-A- 2 451 326
US-A- 3 231 058
US-A- 4 529 079

(73) Patentinhaber: TEXTAR KUPPLUNGS- UND
INDUSTRIEBELÄGE GMBH
Mülheimer Strasse 79
W-5090 Leverkusen-Schlebusch (DE)

(72) Erfinder: Lenschen, C. R., Dipl.- Ing.
Innsbrucker Str. 31
W-4019 Monheim (DE)
Erfinder: Strohm, Fritz, Dipl.-Ing.
Im Wiesengrund 35
W-5067 Kürten-Eichhof (DE)

(74) Vertreter: Gudel, Diether, Dr. et al
Patentanwälte Dipl.-Ing. G. Dannenberg Dr. P.
Weinhold Dr. D. Gudel Dipl.-Ing. S. Schubert
Dr. P. Barz Grosse Eschenheimer Strasse 39
W-6000 Frankfurt am Main 1 (DE)

## Beschreibung

Die Erfindung betrifft ein mehrschichtiges Bauelement zur Übertragung einer Reibungskraft, insbesondere für Kupplungen oder Bremsen, mit einer Trägerschicht, einer Zwischenschicht aus elastomerem Material und einer Reibschicht aus einem Reibwerkstoff, ggf. unter Zwischenlage wenigstens einer weiteren Trägerschicht und wenigstens einer weiteren Zwischenschicht zwischen der Trägerschicht und der Reibschicht.

Herkömmliche Kupplungen bestehen aus einer Eisen-Trägerplatte, die mit dem Kupplungsbelag durch Nieten verbunden ist. In der Trägerplatte sind außerdem häufig Kröpfungen ausgebildet, die der Kupplung eine Elastizität in axialer Richtung verleihen. Hieran ist es insbesondere nachteilig, daß der Kupplungsbelag nur bis zur Tiefe der Nieten abgetragen werden kann, weil dann über die Nieten keine einwandfreie Reibungsverbindung mehr gewährleistet wird. Das Material des Kupplungsbelages zwischen der Oberseite der Nieten und der Trägerplatte ist also für die eigentliche Reibarbeit nicht nutzbar.

Hier hat schon ein mehrschichtiges Bauelement Abhilfe geschaffen, das in der GB-A-2191830 beschrieben ist. Dort wird die Nietenverbindung durch eine Klebeverbindung ersetzt und von diesem Stand der Technik geht die Erfindung aus. Als Vorteil ist anzumerken, daß dort, zumindest theoretisch, die gesamte Stärke des Kupplungsbelags ausgenutzt werden kann, ehe der Kupplungsbelag erneuert werden muß. Man kommt daher mit entsprechend dünneren Kupplungsbelägen aus, was nicht nur Kosten spart, sondern die Trägheit der Kupplung fühlbar verringert. Hier ist auch zu berücksichtigen, daß der Kupplungsbelag sich im Bereich des äußeren Radius der Kupplung befindet, welcher Bereich bekanntlich quadratisch in das Trägheitsmoment eingeht.

Die Trägerscheibe und der eigentliche Kupplungsbelag werden bei der erwähnten GB-A-2191830 über einen schnell aushärtenden Silikonkautschuk miteinander verklebt, der spiralig auf die Trägerscheibe aufgebracht wird. Der Silikonkautschuk härtet innerhalb von etwa zehn Sekunden aus und in dieser Zeit muß die Verbindung hergestellt werden. Der Silikonkautschuk wird aus einer Kartusche ausgepreßt und bei jeder neuen Klebeverbindung trägt daher das Anfangsstück des Silikonkautschuks zum Kleben nichts bei. Ein Abschneiden dieses Anfangs-Silikonkautschuk stücks ist wegen der sehr kurzen zur Verfügung stehenden Zeit häufig nicht möglich. Noch stärker fällt nachteilig ins Gewicht, daß, wie Versuche gezeigt haben, die Klebeverbindung den Belastungen im Betrieb einer derartigen Kupplung nicht standhält.

Die Erfindung vermeidet diese Nachteile. Ihr liegt die Aufgabe zugrunde, ein mehrschichtiges Bauelement zur Übertragung einer Reibungskraft, insbesondere für Kupplungen oder Bremsen vorzuschlagen, das allen im Betrieb auftretenden Anforderungen und Belastungen standhält. Insbesondere soll das erfindungsgemäße Bauelement in axialer und/oder tangentialer Richtung eine definierte Federcharakteristik aufweisen.

Zur Lösung dieser Aufgabe ist die Erfindung dadurch gekennzeichnet, daß die Zwischenschicht im wesentlichen aus hydriertem Nitrilkautschuk und/oder einem Fluorelastomer besteht und über ein zusammengesetztes Bindemittel mittels Chemosorption mit den angrenzenden Schichten verbunden ist.

Versuche haben ergeben, daß hydrierter Nitrilkautschuk und auch Fluorelastomer allen Anforderungen und Belastungen genügen, die im Betrieb an eine derartige Kupplung oder Bremse gestellt werden. Die aus diesen Materialien bestehende, erfindungsgemäße Zwischenschicht erfüllt somit die Aufgabe, dem betreffenden Bauelement ein definiertes Federverhalten (in axialer und/oder tangentialer Richtung) zu erteilen. Dies erfolgt in erster Linie durch eine geeignete Formgebung und/oder Zusammensetzung der Zwischenschicht. Außerdem sorgt die Zwischenschicht für eine hochbelastbare Verbindung zu den angrenzenden Materialien, wozu das erwähnte Bindemittel vorgesehen ist, welches mittels Chemosorption die betreffenden Schichten dauerhaft und hochbelastbar miteinander verbindet.

Beim erfindungsgemäßen Bauelement kann man somit auf mechanische Verbindungsmittel, beispielsweise Nieten, wie beim Stand der Technik, verzichten. Man kann somit die gesamte Dicke der Reibschicht für die Übertragung der Reibungskraft ausnutzen bzw. man kann entsprechend dünnere Reibschichten verwenden, abermals verbunden mit dem Vorteil eines fühlbar verringerten Trägheitsmoments.

Wie erwähnt erfolgt die Verbindung zwischen der Zwischenschicht und den angrezenden Schichten über Chemosorption, auch Chemisorption genannt. Diese Chemosorption liegt bekanntlich vor, wenn ein gasförmiger, flüssiger oder gelöster Stoff an der Oberfläche eines Festkörpers oder von einer Flüssigkeit unter Bildung einer chemischen Verbindung angelagert bzw. aufgenommen wird. Sie unterscheidet sich also wesentlich von einer Klebeverbindung wie beim Stand der Technik, die den Nachteil hat, daß der Klebstoff aushärtet. Bei dann auftretenden Belastungen, insbesondere Biegebelastungen, besteht dann beim Stand der Technik die Gefahr, daß die Klebeverbindung reißt. Alle diese Nachteile sind bei dem erfindungsgemäßen Bauelement nicht vorhanden.

Zur Unterstützung der Chemosorption können die mit der Zwischenschicht zu verbindenden Flächen der Trägerschicht und der Reibschicht vor der Verbindung mechanisch und/oder chemisch aktiviert werden. Zur Aktivierung einer aus Metall bestehenden Trägerschicht wird man insbesondere diese mit einer feinkristallinen Zinkphosphatschicht aktivieren und anschließend passivieren (nachverdichten), beispielsweise durch chromsäurehaltige Lösungen.

Für das Bindemittel wird eine Basis von modifizierten Phonolharzen und/oder modifizierten Kresolharzen bevorzugt, denen Synthesekautschuk und aktive Füllstoffe in einer feinverteilten Lösungsmitteldispersion zugesetzt sind. Man wird keine feuchtigkeitsreaktiven Bindemittel verwenden, um die Verbindung feuchtigkeitsresistent und verarbeitungssicher zu machen. Als aktive Füllstoffe kann man Vulkanisations-Hilfsmittel und dergleichen nehmen. Die dispergierten Feststoffe sollen im Lösungsmittel sehr fein verteilt sein, damit die betreffende Oberfläche (der Trägerschicht bzw. der Reibschicht) auch bis in die mikroskopischen Vertiefungen hinein aktiviert ist.

Man kann die Zwischenschicht und/oder die Trägerschicht flächenkongruent mit der Reibschicht ausbilden. Ein weiterer Freiheitsgrad besteht aber darin, daß die Zwischenschicht und/oder die Trägerschicht nur in Teilflächen kongruent mit der Reibschicht sind. Dieser zusätzliche Freiheitsgrad beruht darauf, daß die erfindungsgemäße Verbindung zwischen den Schichten so gut ist, daß man aus Gründen der Verbindung keine vollflächige Zwischenschicht benötigt ; diese kann vielmehr in vorbestimmten Bereichen ausgestanzt sein oder eine reduzierte Dicke haben zwecks Erzielung einer gezielten Federcharakteristik. Im Extremfall kann die Zwischenschicht beispielsweise durch eine Noppenbahn gebildet werden derart, daß nur die Spitzen der Noppen mit den angrenzenden Schichten verbunden sind. Es sind aber beliebige Konfigurationen der Zwischenschicht möglich, ggf. auch der Trägerschicht, während man die Reibschicht in der Regel vollflächig ausbilden wird zwecks Erzielung einer möglichst hohen Reibungskraft.

Die Vorteile des erfindungsgemäßen Bauelements beruhen auch darauf, daß die Reibschicht verhältnismäßig dünn ausgebildet werden kann und dann sich in ihrer Kontur sehr gut der Fläche der von außen an der Reibschicht anliegenden Gegenschicht anpaßt, so daß praktisch von Anfang an die gesamte Fläche der Reibschicht gleichmäßig zur Erzeugung der Reibungskraft beiträgt. Thermische lokale Spitzenbelastungen, wie beim Stand der Technik, treten daher nicht mehr auf, zumindest wenn man die Reibschicht ausreichend dünn und flexibel macht.

Die Erfindung wird im folgenden anhand eines Ausführungsbeispieles näher erläutert, aus dem sich weitere wichtige Merkmale ergeben. Es zeigt :

Fig. 1 — perspektivisch in auseinandergezogener Darstellung den grundsätzlichen Aufbau eines erfindungsgemäßen Bauelements, das hier aus drei Schichten besteht und mit flächenkongruenten Schichten ;

Fig. 2 — eine Seitenansicht eines derartigen Bauelements in unbelastetem Zustand (Kraftvektoren $F_0$ und Dicke der elastischen Zwischenschicht $S_0$) ;

Fig. 3 — die Situation von Fig. 2 in belastetem Zustand (Kraftvektoren $F_n$ und Dicke $S_n$) ;

Fig. 4 — als Diagramm die Federcharakteristik dieses Bauelements, wobei die in N gemessene Kraft F über der in mm gemessenen Auslenkung aufgetragen ist ;

Fig. 5 — eine Darstellung entsprechend Fig. 1 mit einer rahmenförmigen Zwischenschicht, die also nicht flächenkongruent ist ;

Fig. 6 — eine Ansicht des Bauelements nach Fig. 5 entsprechend Fig. 2 ;

Fig. 7 — eine Ansicht dieses Bauelements entsprechend Fig. 3 ;

Fig. 8 — die Federcharakteristik dieses Bauelements ;

Fig. 9 — als Beispiel eine zusammengesetzte Federcharakteristik eines erfindungsgemäßen Bauelements.

Zunächst werden der Aufbau und die Eigenschaften eines Bauelements bzw. seiner Komponenten beschrieben.

Die erfindungsgemäße Werkstoffverbindung wird hauptsächlich aus wenigstens drei unterschiedlichen Werkstoffen gebildet, die dauerhaft miteinander verbunden sind.

Die drei Hauptschichten sind wie folgt definiert :

Schicht Nr. 1 (Reibschicht) :

Reibwerkstoff : a) aufgebaut aus sogenannter Faserpreßmasse, d.h. bestehend aus organischen Bindemitteln, Kurzfaser und/oder Mahlflock und Füllstoffkomponenten ; und/oder

b) aufgebaut aus einem polymeren Reibzement und Armierungsgarn (-garnen) und-/oder Zwirn (Zwirnen), die zuvor mit dem polymeren Reibzement imprägniert und/oder beschichtet wurden. Die Wickelstruktur kann spiralförmig oder nach dem Scatter-wound/Random-wound Verfahren erstellt sein ; und/oder

c) aufgebaut auf mit Reibzement imprägnierten und/oder beschichteten Gewebestreifen und/oder -bändern ; und/oder

d) aufgebaut auf mit Reibzement imprägnierten und/oder übereinander geschichteten Flieslagen.

Schicht Nr. 2 (Zwischenschicht) :

Aufgebaut aus einer hoch reaktiven und speziell gefüllten Elastomer-Haftmischung, die unter Einwirkung von Druck, Temperatur und Zeit ausvulkanisiert und danach bestimmte, definierte Funktionseigenschaften im machenischen/dynamischen Bereich in sich selbst wie auch bezogen auf die Verbindung mit den beiden anderen Schichten Nr. 1 und Nr. 3 sicherstellt.

Schicht Nr.3 (Trägerschicht) :

Metallischer oder nicht metallischer Trägerwerkstoff in Form einer geometrischmechanisch geformten Scheibe, Platte, Segment, Streifen beliebiger geometrischer Dicke, Länge, Breite oder Durchmesser-Ausdehnung.

Beschreibung der Verbindung zwischen Schicht 1, 2 und 3.

Die Schichten 1, 2 und 3 werden nach entsprechender Vorbehandlung unlösbar und dauerhaft zu einer Baugruppe durch **Chemosorption** miteinander verbunden. Die so entwickelte minimal 3- oder n-schichtige Baugruppe (n > 2) garantiert dann exakt definierte Funktionseigenschaftswerte, schichtbezogen wie auch übergreifend im Schichtverbund.

Hierunter ist zu verstehen, daß sich unter Einsatzbedingungen tribologische, dynamische und festigkeitsmäßige Eigenschaftswerte des Schichtverbundes gegenseitig ergänzen, unterstützen (verstärken), kompensieren und/oder aufheben. Der Elastizitätseigenschaft der Schicht Nr. 2, senkrecht oder quer zur Belastungsrichtung fällt ein besonderer funktioneller Stellenwert zu (axiales, radiales und/oder tengentiales definiertes Feder- und/oder Dämpfungsverhalten).

Die bei der Reibfunktion zwischen der Schicht Nr. 1 und dem Gegenlaufwerkstoff auftretenden regellosen (stochastischen) Reibschwingungen können durch die Konsistenz und die geometrische Form der Elastomerschicht Nr. 2 soweit positiv beeinflußt werden, daß es möglich ist, bestimmte Schwingungsspektren in andere Frequenzbereiche zu transformieren oder diese sogar durch Eigendämpfung gänzlich zu eliminieren.

Ferner kann durch die Konsistenz und geometrische Formgebung der Elastomerschicht Nr. 2 die Charakteristik der Krafteinleitung genau vorausbestimmt werden, so daß hierdurch heute übliche metallische Federelemente in Form von z.B. Segmentfedern in ihrer Funktionscharakteristik gleichwertig oder höherwertig ersetzt werden können.

Als Folge dieser Eigenschaft der Elastomerschicht Nr. 2 und in Verbindung mit einer an sie angepaßten Dicke der Reibstoffschicht Nr. 1 ist der Schichtverbund in der Lage, sich über Nr. 1 und 2 optimal an den Gegenlaufwerkstoff (Grauguß GG, Stahl St etc.) anzuschmiegen.

Hierdurch wird garantiert, daß sich die Reibwerkstoffoberflächen bereits nach kurzer Einlaufzeit (Einbettungszeit) zu optimalen Tragbildern entwickeln. Reibflächentransformationen und variierende Reibkräfte, -radien und/oder Reibmomente, wie bei heute üblichen kraft-/form- und klebschlüssigen Verbindungen zwischen Reibwerkstoff und Trägerwerkstoff existent, werden sehr stark reduziert oder quasi gänzlich eliminiert. Da sich jede Oberflächeneinheit fast gleichmäßig an der Energieumwandlung während des dynamischen Reibungsprozesses in Form von Reibarbeit, Rutscharbeit, Formänderungsarbeit und thermischer Konvektion sowie Reflexion beteiligt, kann mit der Schichtverbundkonstruktion in der Summe eine höhere dynamische Reibleistung übertragen werden.

Bei Beibehaltung des heute üblichen energetischen Anforderungsprofils, sich ableitend aus der konventionellen Konstruktion über federnde Reibstoffaufnahmen und einer Kraft-/Form-/Klebschlüssigkeit von Reibstoff und Metallträgern, erreicht man :

a) durch dieses hohe, d.h. vollflächige Tragbild der Reibwerkstoffschicht Nr. mit Gegenlaufwerkstoff (GG; St ; etc) ein deutlich niedrigeres Verschleißverhalten und damit eine Steigerung der Haltbarkeit bzw. der Lebensdauer.

b) Die Möglichkeit, daß sich nur wechselnde partielle Reibzonen an der Reibenergieübertragung beteiligen (Reibfleckenbildung) und es dabei als Folge zu Temepraturkonzentrationen auf den Flächen des Gegenlaufwerkstoffes kommt (hot spots), ist sehr klein. Gleichermaßen gering ist die Chance, daß sich durch Bildung von Temperaturnestern auf der Reibwerkstoffoberfläche der Schicht Nr. 1 Versinterungen und/oder Glasfleckenbildungen entwickeln.

c) Die gleichmäßige Ausnutzung der vorhandenen geometrisch/konstruktiv festgelegten Soll-Reibfunktionsflächen (Quadrat ; Rechteck ; Kreis ; Kreisring ; Segment ; etc.) an der dynamischen Reibenergieübertragung, erlauben es, diese derzeitig notwendigen Flächen bei Verwendung der Erfindung entsprechend reduzieren zu können.

d) Daraus leitet sich erstens die Perspektive ab, daß bei Anwendung dieses Konstruktionssystems die Baumaße heutiger reibschlüssiger Brems- und Kupplungsaggregate verkleinert werden können und zweitens, daß ein gesteigertes Komfortverhalten in der Reibschlüssigkeitsphase gegeben ist.

Beschreibung der Herstellung der Schicht Nr. 2 und der erforderlichen Präparationstechniken bezogen auf Schicht Nr. 1 und 3

Das Prinzip, im Rahmen einer Gummi-Metall-Reibbelagbindung völlig unterschiedliche Substrate miteinander zu verbinden, die mit normalen Klebstoffen nur sehr schwer oder gar nicht verklebt werden können, ist mit Bezug auf diese Erfindung nunmehr auch auf Reibbeläge übertragbar, sofern mit den dort eingesetzten organischen Bindemitteln eine gewisse Affinität besteht. Die Verbindung muß dabei dem Anspruch genügen, hoch thermisch belastbar und korrosionsstabil zu sein und Beständigkeit gegen übliche Fette, Öle und sonstige Reinigungsmittel zu gewährleisten.

In der Phase der Grundsatzuntersuchungen wurden zu diesem Zweck die verschiedensten handelsüblichen Elastomere auf der Basis von

NR ; SBR ; FPM ; EPDM ; CR ; NBR und Silikon erprobt. Am Ende dieser Versuchsreihen wurden für diese hochwertige Elastomer-Zwischenschicht Nr. 2 ein voll hydrierter Nitril-Kautschuk (HNBR) gewählt.

Diese Entscheidung wurde auch dadurch getragen, daß die Doppelbindungen in der Polymerkette des NBR sehr reaktionsfähig sind und damit gewährleisten, daß additionsfähige chemische Substanzen angelagert werden können. Hierdurch werden sehr beständige Verbindungen zwischen Elastomer (HNBR) und einem geeigneten Bindesystem sichergestellt.

Weiterhin konnte in Vorversuchen festgestellt werden, daß eine Reibbelag/Elastomer/Metall-"Klebung", wobei beim Elastomer in diesem Fall ein Vulkanisat verstanden wird, keine beständigen, dauerhaften Verbindungen gegen Schwitzwasser bzw. "kochendes" Wasser garantiert (gem. DIN 50017). Die "Klebung" war nach kurzer Zeit versprödet und strukturell zerstört. In der weiteren Erprobungsphase wurde ein "zusammengesetztes" Gummi-Metall-Bindemittel eingesetzt, das bereits eine wesentlich höhere mechanische Festigkeit und thermische Beständigkeit ($\geq$250°C) der Bindung garantierte. Der Grund für die höhere Güte dieser Bindung ist wie folgt zu erklären :

Auf "aktivierten" Metalloberflächen (chemisch und/oder mechanisch) und an den Grenzflächen Bindemittel/Elastomer wie auch Bindemittel/Metall und Bindemittel/Reibbelag treten chemische Wechselwirkungen auf, welche ungefähr in gleichen Größenordnungen stattfinden. Man kann annehmen, daß sich durch "Elektronenaustausch" an diesen Grenzflächen der Verbindung zwischen Schicht 1, 2 und 3 elektrisch geladene Doppelschichten ausbilden, die sich gegenseitig wie Kondensatorplatten über gleichgroße Ladungsträger anziehen, so daß sich durch diese Wechselwirkungen an den erwähnten Grenzflächen über eine Chemosorption ein Höchstmaß an mechanischer Festigkeit einstellt. Die praktischen Versuche machten von der Möglichkeit Gebrauch, eine "unvulkanisierte" HNBR-Kautschuk-Mischung mit den zu bindenden Substraten (Reibbelagschicht Nr. 1 oder Trägermaterialschicht Nr. 3) zum Einsatz zu bringen. Dabei kann sowohl diese Mischung spritzbar (TM und/oder IM-Verfahren), wie auch das Kalandrieren zu Fellen oder Folien als Herstellungsverfahren gewählt werden. Erst unter Druck und Temperatur nach einer vorgegebenen Einwirkzeit vulkanisiert hierbei die Zwischenschicht Nr. 2 mit dem Reibbelagrücken (Schicht Nr. 1) und mit dem Trägermaterial (Schicht Nr. 3) in einem speziell dafür erstelltem Werkzeug zu einer unlösbaren Verbindung aus.

Die günstigen energetischen Prozeßparameter sowohl für das Vukanisat wie auch für die Bindung ergaben sich durch eine sog. "Stufenheizung". Die Erfahrungen, die während dieser Optimierungsversuche mit hydriertem Nitrilkautschuk gemacht werden konnten, haben gezeigt, daß normalerweise ein hoher Vulkanisationsgrad — weitgehend unabhängig von der Temperatur und Zeit — Funktionsvoraussetzung für eine gute Bindung ist, und daß das entwickelte Elastomer gut zu binden ist, wenn die Vulkanisationscharakteristik durch eine ausreichende "Fließperiode", eine hohe "Vulkanisationsgeschwindigkeit" und ein ausgeprägtes "Plateau" gekennzeichnet ist (Indikator hierfür = Rheometer-Kurve). Über entsprechende Verlaufscharakteristika im Wechselspiel zwischen Vulkanisationskurve und Monsanto-Rheometer-Funktion wurde das verwendete Bindesystem optimiert.

Die zunächst noch thermoplastische Kautschukmasse (Elastomer-Zwischenschicht Nr. 2 = HNBR) erweicht unter Druck und Temperatur und stellt während der "Fließperiode" einen innigen Kontakt zum Bindemittelfilm Bindemittel/Träger einerseits und Bindemittel/Reibbelag andererseits her. Nach Einsetzen der Vulkanisation, der sog.

Inkubationszeit, tritt die unlösbare und dauerhafte Bindung ein. Dieser Effekt ist über den ansteigenden Kurvenfunktionsteil im Rheometer exakt nachweisbar. Nach Abkühlung der Baugruppe, bestehend aus Schicht 1, 2 und 3, von einem Temperaturniveau zwischen 130-165° auf Raumtemperatur ist die Endfestigkeit des Funktionsteils erreicht.

Weitere energetische oder mechanische Bearbeitungsvorgänge werden nicht benötigt.

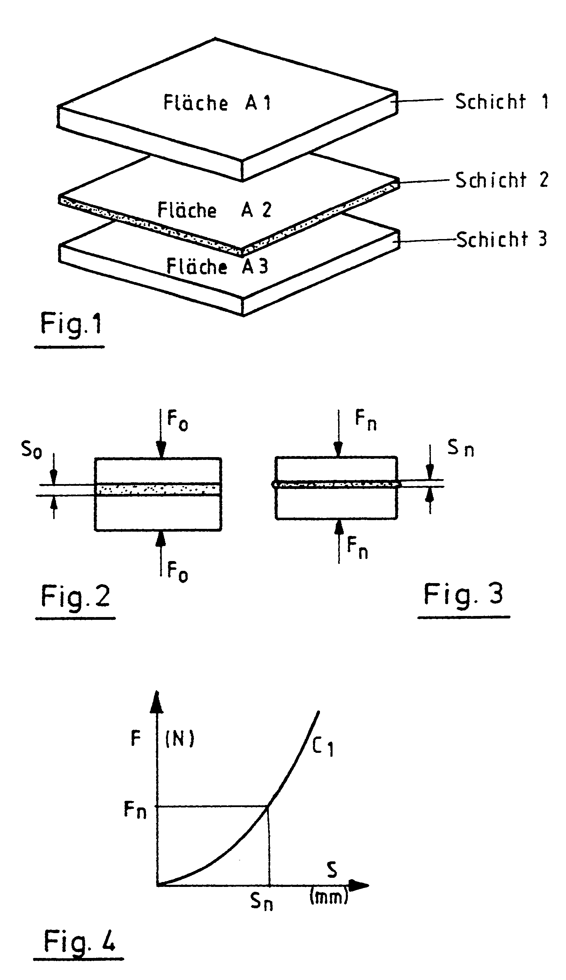

Aus dieser grundsätzlichen Beschreibung geht ebenfalls hervor, daß die Bindung unabhängig von den beaufschlagten Flächenanteilen in den Berührungsflächen der Schichten 1-2 und 2-3 ist. Es ist somit möglich, von der Flächenkongruenz (Abb. 1) abweichende Oberflächengeometrien für die Elastomer-Zwischenschicht Nr. 2 gezielt festzulegen. Somit können aus dem Fell und/oder der Folie definiert festgelegte geometrische Flächenkonfigurationen entnommen, und im Sinne des Schichtenverbunds zusammengeführt werden. Diese Fell-/Folien-"Rohlinge" können sowohl in ihrer Dicke als auch in ihrer Flächigkeit u.a. zu Gittern, Raster, Mäandern, Ketten, zusammenhängend oder frei mechanisch ausgestanzt sein. Die Teilflächigkeit oder der Flächenverbundsanteil zwischen der Schicht 2 und 1 einerseits, wie auch Schicht 2 und 3 andererseits und die Dicke der zu wählenden Folie oder des Fells (Sx) schafft bei A ialbelastung über Querkontraktionskräfte einen zusätzlichen Freiheitsgrad bezogen auf die Federelastizität (Abb. 2). Der andere Freiheitsgrad wird durch die Konsistenz der Elastomerschicht über die chemisch-stofflichen Komponenten, wie auch den Vulkanisationsgrad erreicht. Diese Zusammenhänge sind in der Abb. 3 graphisch dargestellt (Superposition).

## Anwendung

Die bestehende Werkstoffverbindung, bestehend aus den Schichten 1, 2 und 3, legt bezogen auf die Schicht 1 zwangsläufig immer einen organischen und/oder anorganischen Reibwerkstoff fest.

Insofern handelt es sich bei allen denkbaren Anwendungsfällen, bei denen diese Erfindung zum Einsatz gebracht wird, um reibschlüssige Übertragungsverbindungen und damit generell um Einsatzfälle im Sinne tribologischer Anwendungsformen.

In diese Kategorie fallen alle tribologischen Funktionen, die man unter dem Sammelbegriff der Haft-, Kriech- und Gleitreibung einordnen kann (statische und dynamische Reibungsprozesse).

Klassische Hauptanwendungen liegen im Bereich der Antriebstechnik (z.B. Reib- und Rutschkupplungen), wie auch im Bereich der Bremsentechnik (z.B. Scheiben-, Trommel- und Bandbremsen).

Die Reibenergie oder Arbeit ist bei Berücksichtigung umgekehrter Vorzeichen grundsätzlich zwischen den beiden Hauptanwendungsbereichen > Antriebstechnik = Kupplungen und Bremstechnik = reibschlüssige Bremsen vom Skalar (Wertbetrag) her gleich und wird in (J) oder (Nm$^2$) angegeben. Bezieht man die sich aus der Reibenergie oder Arbeit ableitende Reibleistung auf eine Oberflächeneinheit, so definiert man damit die spezifische Reibleistung. Sie wird in (W/cm$^2$) dargestellt.

Durch das mit der beschriebenen Erfindung optimierte gleichmäßige Tragbild der Reibflächen ist es möglich, höhere Reibenergien während der Energietransformation sicher zu übertragen (dynamisch ablaufende Prozesse). Im Falle einer statischen (sich nicht bewegenden) Einsatzanordnung werden höhere und gleichmäßigere Kraft- und Reibmomentübertragungen möglich (z.B. Sicherheitsrutschkupplung).

Hieraus leitet sich konsequenterweise im Vergleich zu den heute üblichen konstruktiven Ausführungen ab, daß bei Beibehaltung dieser energetischen Kennwerte eine adäquate Verkleinerung der effektiven Reibflächen stattfinden kann. Dieses bedeutet letzlich, daß eine Verkleinerung der Aggregatebaumaße zulässig ist (Bremsen und Kupplungen).

Da die Krafteinleitung besonders über den Verbund der Schicht 1 und 2 funktionell und definiert gesteuert werden kann (Dicke der Reibstoffschicht, Konsistenz der Elastomer-Zwischenschicht, geometrische Formgebung der Elastomer-Zwischenschicht), ist einkomfortabler, reibschlüssiger Eingriff gegeben. Reibwertinstabilitäten innerhalb der Rutschphase von :

$$V_n \to V_{rel} = 0 \ (V = \text{Geschwindigkeit})$$

(Synchronlauf) werden durch das Torsionsfederverhalten der Schicht Nr. 2 weitestgehend tangential (Querkraft) absorbiert. Stick slip-Phänomene, beschrieben als sogenanntes Rubbeln (Bremse), Rupfen (Kupplung) und Geräuschentwicklungen (generell) lassen sich durch die Erfindung deutlich reduzieren oder eliminieren.

Das erfindunggemäße Bauelement zeichnet sich also insbesondere durch die folgenden Merkmale aus :

1. Minimal 3 bzw. maximal etwa 10 Schichten, wobei immer zwingend eine Schicht (die Reibschicht) aus einem organischen/anorganischen Werkstoff bestehen muß.

2. Als Trägerwerkstoff (Schicht Nr. 3) kann jedes beliebige Material, metallisch oder nicht metallisch, zum

6

Einsatz gebracht werden.

3. Die Zwischenschicht Nr. 2 besteht aus einer geeigneten Mischungsrezeptierung.

4. Der Verbund wird über **Chemosorption** und zusammengesetzte Bindemittel sichergestellt.

5. Die Oberflächenvorbehandlung (Aktivierung) erfolgt mechanisch und/oder chemisch.

6. Die Zwischenschicht Nr. 2 ist dauerhaftig, worunter verstanden wird, daß Dauertemperaturen $\leq$ 180°C gemäß DIN 53 508 und ASTM D 429 auf die Schicht einwirken können.

7. Die Schicht Nr. 2, wie auch ihre Bindung an die Schicht Nr. 1 und 3 ist beständig gegen Öle, Fette, Reinigungsmittel, Kraftstoff usw. gemäß DIN 53521.

8. Zwischen Schicht Nr. 1, 2 und 3 kann sowohl Flächenkongruenz oder auch nur Teilflächenkongruenz bestehen, d.h.daß die Trägerfläche Nr. 3 $\neq$ 1 bzw. Nr. 2 $\neq$ 1 und 3 sein kann.

9. Die Zwischenschicht Nr. 2 wird maßgeblich aus HNBR und/oder FPM gebildet.

10. Dem Schichtverbund ist eine definierte Gummifeder-Charakteristik (axial und/oder tangential) zu eigen.

Die Figuren 1-4 zeigen als Beispiel flächenkongruente Schichten und im Diagramm die von außen einwirkende Kraft, aufgetragen über dem Federweg (Federkennlinie $C_1$). Für die Flächen A gilt : $A_1 = A_2 = A_3$.

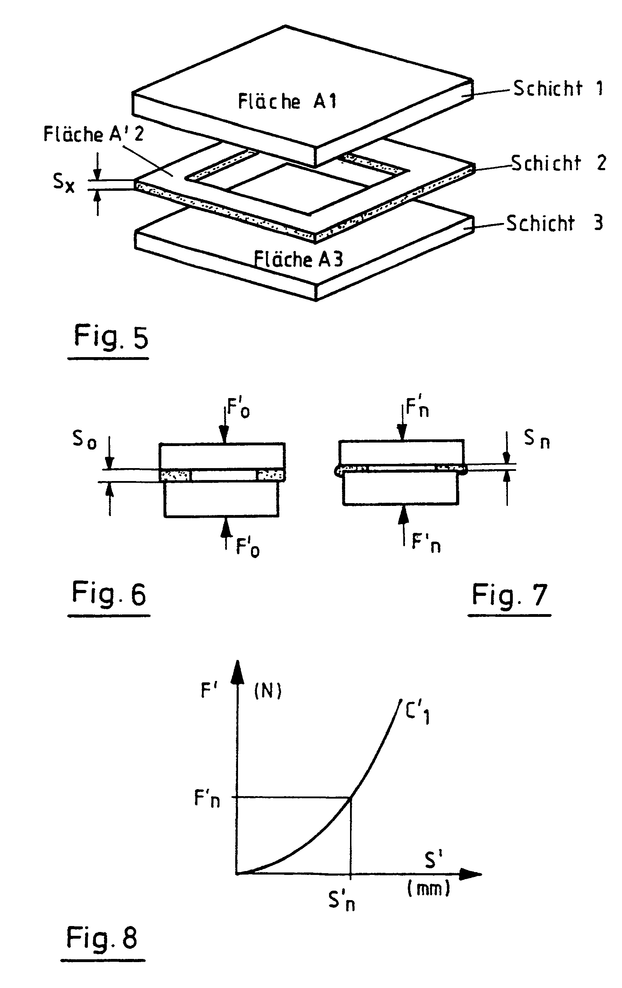

Fig. 5-8 zeigen eine nicht flächenkongruente Zwischenschicht, die in diesem Beispiel rahmenförmig ist, ebenfalls mit zugehöriger Federkennlinie $C_1'$. Für die Flächen gilt : $A_1 \neq A_2 \neq A_3$.

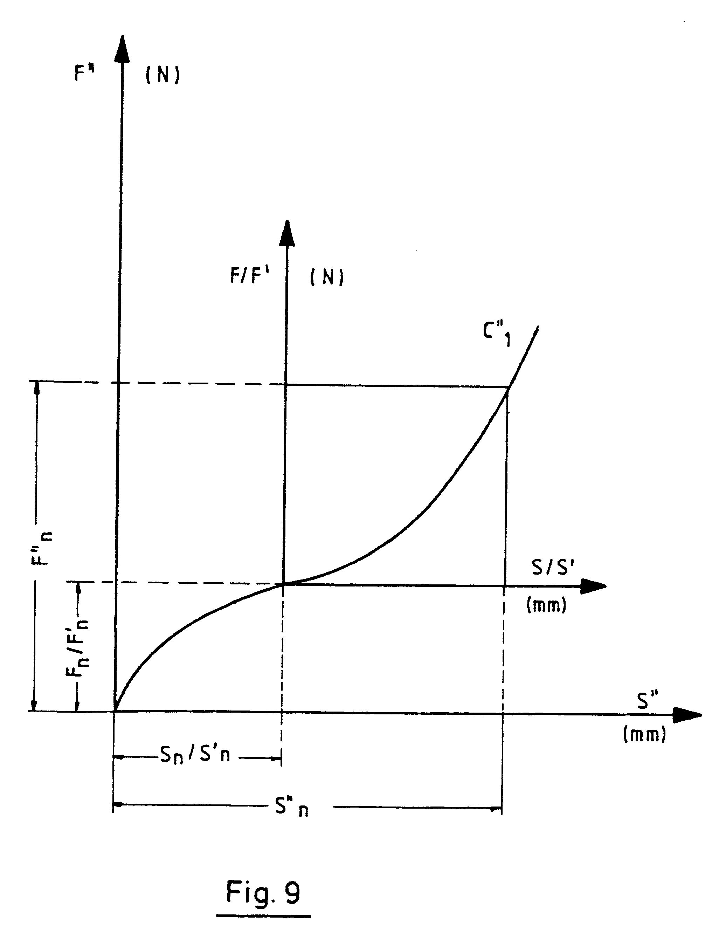

Figur 9 zeigt als Beispiel eine zusammengesetzte Federkennlinie $C_1''$, woraus der Einfluß der Werkstoffgestaltung und der Formgestaltung der Zwischenschicht 2 deutlich wird.

**Patentansprüche**

1. Mehrschichtiges Bauelement zur Übertragung einer Reibungskraft, insbesondere für Kupplungen oder Bremsen, mit einer Trägerschicht (3), einer Zwischenschicht (2) aus elastomerem Material und einer Reibschicht (1) aus einem Reibwerkstoff, ggf. unter Zwischenlage wenigstens einer weiteren Trägerschicht (3) und wenigstens einer weiteren Zwischenschicht (2) zwischen der Trägerschicht (3) und der Reibschicht (2), **dadurch gekennzeichnet**, daß die Zwischenschicht (2) im wesentlichen aus hydriertem Nitrilkautschuk (HNBR) und/oder einem Fluorelastomer (FPM) besteht und über ein zusammengesetztes Bindemittel mittels Chemosorption mit den angrenzenden Schichten (1, 3) verbunden ist.

2. Bauelement nach Anspruch 1, **dadurch gekennzeichnet**, daß die mit der Zwischenschicht (2) zu verbindenden Flächen der Trägerschicht (3) und der Reibschicht (1) mechanisch und/oder chemisch vorbehandelt werden.

3. Bauelement nach Anspruch 1 oder 2, **dadurch gekennzeichnet**, daß das Bindemittel auf der Basis von modifizierten Phenolharzen und/oder modifizierten Kresolharzen Synthesekautschuk und aktive Füllstoffe in einer fein verteilten Lösungsmitteldispersion enthält.

4. Bauelement nach einem der Ansprüche 1 bis 3, **dadurch gekennzeichnet**, daß die Zwischenschicht (2) und/oder die Trägerschicht (3) flächenkongruent mit der Reibschicht (1) sind.

5. Bauelement nach einem der Ansprüche 1 bis 3, **dadurch gekennzeichnet**, daß die Zwischenschicht (2) und/oder die Trägerschicht (3) nur in Teilflächen kongruent mit der Reibschicht (1) sind.

**Claims**

1. Multiple layer structural element for the transmission of a frictional force, particularly for clutches or brakes with a supporting layer (3), an intermediate layer (2) of elastomer material and a frictional layer (1) of a friction material, possibly with an intermediate layer of at least one further supporting layer (3) and at least one further intermediate layer (2) between the supporting layer (3) and the friction layer, characterized in that the intermediate layer (2) is consisting substantially of hydrogenerated nitrile caoutchouc (HNBR) and/or a fluor elastomer (FPM) being connected by a composed binder by means of chemical sorption with the adjoining layers (1, 3).

2. Structural element according to claim 1, characterized in that the planes of the supporting layer (3) and the frictional layer (1) to be connected with the intermediate layer (2) are pretreated mechanically and/or chemically.

3. Structural element according to claim 1 or 2, characterized in that the binder on the basis of modified phenol resins and/or modified cresol resins is containing synthetic caoutchouc and active fillers in a finely

EP 0 351 447 B1

spreaded solution dispersion.

4. Structural element according to any of claims 1 to 3, <u>characterized</u> in that the intermediate layer (2) and/or the supporting layer (3) are equiareal with the frictional layer (1).

5. Structural element according to any of claims 1 to 3, <u>characterized</u> in that the intermediate layer (2) and/or the supporting layer (3) are only equiareal in partial planes with the frictional layer (1).


**Revendications**

1. Elément de construction composé de plusieurs couches pour la transmission d'une force de friction, notamment pour embrayages ou freins, cet élément comportant une couche (3) de support, une couche (2) intermédiaire en matière élastomère et une couche (1) de friction en un matériau de friction, éventuellement avec interposition d'au moins une autre couche (3) de support et d'au moins une autre couche (2) intermédiaire entre la couche (3) de support et la couche (2) de friction, caractérisé en ce que la couche (2) intermédiaire consiste essentiellement en caoutchouc nitrile hydrogéné ("HNBR") et/ou en fluoro-élastomère et est reliée, par l'intermédiaire d'un liant combiné, par chemisorption avec les couches (1, 3) adjacentes.

2. Elément de construction selon la revendication 1, caractérisé en ce que les surfaces de la couche (3) de support et de la couche (1) de friction, à relier à la couche intermédiaire (2), sont prétraitées mécaniquement et/ou chimiquement.

3. Elément de construction selon la revendication 1 ou 2, caractérisé en ce que le liant, à base de résines phénoliques modifiées et/ou de résines crésoliques modifiées, contient du caoutchouc synthétique et des charges actives sous forme d'une dispersion dans du solvant en fine répartition.

4. Elément de construction selon une des revendications 1 à 3, caractérisé en ce que la couche intermédiaire (2) et/ou la couche de support (3) présentent de la congruence de surface avec la couche (1) de friction.

5. Elément de construction selon l'une des revendications 1 à 3, caractérisé en ce que la couche intermédiaire (2) et/ou le couche (3) de support ne sont congruentes qu'en des surfaces partielles avec la couche (1) de friction.

Fläche A 1 — Schicht 1

Fläche A 2 — Schicht 2

— Schicht 3

Fläche A 3

## Fig.1

$F_0$

$S_0$

$F_0$

## Fig.2

$F_n$

$S_n$

$F_n$

## Fig. 3

$F$ (N)

$C_1$

$F_n$

$S_n$

$S$ (mm)

## Fig. 4

Fläche A1 — Schicht 1

Fläche A'2

$S_x$

Fläche A3 — Schicht 2

— Schicht 3

## Fig. 5

$F'_o$

$S_o$

$F'_o$

## Fig. 6

$F'_n$

$S_n$

$F'_n$

## Fig. 7

$F'$ (N)

$C'_1$

$F'_n$

$S'$
(mm)

$S'_n$

## Fig. 8

Fig. 9